(19) Europäisches Patentamt
European Patent Office
Office européen des brevets

(11) **EP 3 623 772 A1**

(12) **DEMANDE DE BREVET EUROPEEN**

(43) Date de publication:
**18.03.2020 Bulletin 2020/12**

(51) Int Cl.:
**G01D 21/02** (2006.01) **G01K 7/16** (2006.01)
**G01L 9/00** (2006.01)

(21) Numéro de dépôt: **19194730.8**

(22) Date de dépôt: **30.08.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **17.09.2018 BE 201805632**

(71) Demandeur: **Safran Aero Boosters SA**
**4041 Herstal (BE)**

(72) Inventeurs:
• **RAIMARCKERS, Nicolas**
**4263 Tourinne (Braives) (BE)**
• **VALLINO, Frédéric**
**4100 Seraing (BE)**

(74) Mandataire: **Lecomte & Partners**
**76-78, rue de Merl**
**2146 Luxembourg (LU)**

(54) **SYSTÈME DE MESURE POUR TURBOMACHINE**

(57)     Système de mesure (1) pour une turbomachine, le système comprenant un capteur piézorésistif (40) et un module d'analyse (60), le capteur (40) et le module (60) étant tels que le module peut déterminer, à partir de la mesure de deux tensions électriques, une valeur de pression (p) et une valeur de température (T) au voisinage du capteur (40).

L'invention porte également sur un capteur (40) pour un tel système, sur un procédé d'étalonnage et d'utilisation d'un tel système, et sur un banc d'essai de turbomachine comprenant un tel système.

Le capteur peut également être utilisé en vol.

Fig. 3

## Description

### Domaine technique

L'invention concerne le domaine des turbomachines axiales et plus particulièrement les bancs d'essais pour turboréacteurs d'aéronefs. Plus précisément, l'invention concerne un capteur de pression et de température et son utilisation dans un tel banc.

### Technique antérieure

Le document US 7,159,401 B1 décrit un capteur de pression du flux d'air dans un turboréacteur. Le capteur utilisé emploie une technologie piézorésistive qui est également décrite dans les documents US 2015/0114128 A1 ou US 2012/0014936 A1. Des résistances (piézorésistances) sont montées sur une membrane qui se déforme sous l'action de la pression à laquelle elle est soumise. En mesurant les résistances à un instant donné (indirectement via une mesure d'intensité), on peut en déduire la pression appliquée sur la membrane.

Le comportement des résistances peut être affecté par les variations de température. Ainsi, le document US 2015/0114128 A1 propose un circuit électrique de compensation afin de corriger les valeurs de résistances et donc de s'affranchir du paramètre température.

La mesure de la température est quant à elle généralement effectuée au moyen d'un thermocouple. Selon le type de thermocouple employé, la précision de mesure est de l'ordre de 0,2 à 3% de la température mesurée. En pratique cela représente une précision de 0,5 °C au mieux.

Ainsi, la mesure de la pression et de la température nécessite deux capteurs et deux câblages distincts. Or, dans certains cas comme pour un banc d'essai de turboréacteur, des centaines de capteurs sont utilisés et la multiplicité des câblages est problématique, en termes d'encombrement, de coût, d'exploitation des données, etc.

Les capteurs de température ou de pression sont souvent positionnés à distance des zones d'intérêt. Survient alors un problème d'inertie car les pressions et températures perçues sont déphasées par rapport à la zone d'intérêt. En particulier pour une turbomachine, la mesure à distance du flux d'air ne permet pas de mesure à haute fréquence qui soit exploitable.

A l'inverse, des capteurs au plus près du flux d'air peuvent perturber l'écoulement, la mesure devenant intrusive.

### Résumé de l'invention

#### Problème technique

L'invention a pour objectif de surmonter les difficultés présentes dans l'état de l'art et en particulier de proposer un moyen de mesure de pression et de température qui est moins encombrant et plus précis que les moyens connus.

#### Solution technique

L'invention a pour objet un système de mesure pour une turbomachine, le système comprenant un capteur piézorésistif et un module d'analyse, remarquable en ce que le capteur et le module sont reliés par au moins deux paires de conducteurs permettant au module de mesurer deux tensions électriques.

Le module est configuré pour déterminer une valeur de pression et une valeur de température au voisinage du capteur à partir de ces deux tensions. Par « configuré », on entend qu'il est muni de tout moyen électrique, logiciel, mémoire, écran, moyens de communication, etc., et/ou qu'il est étalonné afin de transmettre une valeur de pression et une valeur de température à partir des deux tensions mesurées. Lorsque le capteur est alimenté d'une valeur de courant définie, seules les deux valeurs de tensions sont nécessaires pour pouvoir déterminer la pression et la température.

Le capteur comprend des résistances agencées selon un pont de Wheatstone et est apte à délivrer deux signaux de tension.

Dans un mode de réalisation préféré, le pont de Wheatstone comprend deux branches parallèles, chacune des branches disposant de deux résistances en série et d'un point intermédiaire entre les deux résistances, la température étant estimée à partir d'une mesure de tension aux bornes de deux résistances d'une même branche et la pression étant estimée, connaissant la température, à partir d'une mesure de tension entre les deux points intermédiaires des deux branches.

Selon un mode de réalisation avantageux de l'invention, le capteur est alimenté en courant. En d'autres termes, une source de courant fournit un courant électrique d'intensité définie au pont de Wheatstone, qui n'est donc pas alimenté par une source de tension (pile, secteur, etc.).

Selon un mode de réalisation avantageux de l'invention, les résistances sont agencées sur une membrane déformable. La membrane peut être en silicium.

Selon un mode de réalisation avantageux de l'invention, le capteur comprend une buse avec une cavité, la buse étant percée pour permettre la mise au contact fluidique d'un flux d'air à mesurer avec la cavité.

Une des extrémités de la buse peut ainsi comprendre des orifices pour la mise au contact fluidique de la membrane et du flux d'air. L'autre extrémité est également ouverte pour que les conducteurs provenant du pont de Wheatstone puissent rallier le module d'analyse.

Selon un mode de réalisation avantageux de l'invention, la buse a un diamètre inférieur à 3.5 mm, préférablement inférieur à 3 mm.

Selon un mode de réalisation avantageux de l'invention, le capteur comprend 4 conducteurs aptes à relier le capteur au module d'analyse. Ainsi, les deux conducteurs qui alimentent le capteur en courant peuvent également servir pour la mesure d'une des tensions.

Selon un mode de réalisation avantageux de l'invention, le capteur comprend 6 conducteurs aptes à relier le capteur au module d'analyse. De cette façon, une mesure plus précise peut être obtenue car on s'affranchit de la résistance électrique des câbles d'alimentation du pont.

Selon un mode de réalisation avantageux de l'invention, tous les fils sont groupés dans une gaine commune apte à être connectée au module d'analyse.

Selon un mode de réalisation avantageux de l'invention, au moins une des résistances est un thermistor. Ceci permet de mieux souligner les variations de températures via les variations de résistances.

L'invention porte également sur un procédé de détermination des conditions au voisinage d'un capteur piézorésistif, remarquable en ce qu'il comprend une étape de mesure de deux tensions et la détermination, sur la base de ces deux mesures, de la pression et de la température au voisinage du capteur.

Selon un mode de réalisation avantageux de l'invention, le procédé emploie un capteur tel que décrit ci-dessus.

Selon un mode de réalisation avantageux de l'invention, le capteur est positionné au contact du flux d'air dans une turbomachine.

Selon un mode de réalisation avantageux de l'invention, l'étape de mesure consiste en une mesure à une fréquence comprise entre 8 kHz et 100 kHz. Des plages plus fines peuvent être utilisées au besoin, de 8 à 24 kHz, de 24 à 60 kHz ou de 60 à 100 kHz. Par exemple, pour un compresseur muni d'une rangée de 80 aubes tournant à 6000 tours par minute, le capteur « voit » 480 000 aubes par minute, soit 8 000 aubes par seconde. Afin d'obtenir une analyse fine des phénomènes aérodynamiques, il convient de prévoir plusieurs mesures par passage d'aube, d'où les plages mentionnées ci-dessus.

La présente demande décrit également un procédé d'étalonnage d'un système de mesure tel que décrit ci-dessus, le procédé comprenant une étape d'étalonnage lors de laquelle des pressions et/ou températures connues sont successivement infligées au capteur et les tensions mesurées sont associées à chaque pression et/ou température.

À cette fin, il est possible de prévoir des couples de pression et température successifs.

Alternativement il est possible de figer une température et de faire varier la pression, puis de figer la pression et de faire varier la température.

Il est accessoirement possible de réitérer l'étalonnage pour plusieurs valeurs d'intensité I.

Le procédé d'étalonnage peut comprendre une étape de détermination d'abaques et/ou de formulation approchées des pressions et températures en fonction des tensions mesurées.

Par exemple, pour une température donnée, une régression linéaire ou polynomiale de la pression en fonction de la tension mesurée peut être obtenue.

L'invention porte également sur un banc d'essai de turbomachine comprenant un système de mesure tel que décrit ci-dessus, le capteur étant disposé au voisinage du flux d'air dans le compresseur de la turbomachine.

Selon un mode de réalisation avantageux de l'invention, le capteur est disposé au voisinage du bord d'attaque d'une aube statorique.

Selon un mode de réalisation avantageux de l'invention, le capteur est disposé au voisinage du bord d'attaque d'une aube rotorique, le module d'analyse étant préférentiellement disposé dans la turbomachine et disposant d'éléments de communication sans fil. En effet, des moyens de télémétrie sont nécessaire si le capteur est en mouvement, pour pouvoir transmettre l'information des tensions mesurées ou des pressions et températures.

L'invention peut également porter sur une turbomachine équipée d'un tel système de mesure ou d'un tel capteur. Cette turbomachine peut être une turbomachine d'essai, au sol (dans ou en dehors d'un banc d'essai), montée ou non sur un aéronef ou en vol.

L'invention porte également sur l'utilisation d'un tel système de mesure dans un aéronef en vol.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

Avantages apportés

Le capteur selon l'invention est moins encombrant que les deux capteurs nécessaires à la mesure de la pression et de la température. Ainsi, la mise en place du capteur pour instrumentaliser un turboréacteur est moins fastidieuse, en particulier compte tenu du fait qu'un turboréacteur instrumentalisé comprend des centaines de capteurs.

Le faible encombrement est aussi avantageux car la mesure est moins intrusive dans le flux d'air.

Aussi, le câblage est simplifié, moins lourds, moins encombrant et moins cher. De plus, la mesure peut être faite à haute fréquence et il est donc possible de distinguer les variations de pression et température induites par le passage d'une aube rotorique devant une aube statorique.

La précision de la mesure est également nettement améliorée car on atteint des précisions de l'ordre de 0.1 °C et 0.1 % en pression.

Les solutions présentées dans l'invention évitent également l'inertie de mesure. En effet, des capteurs positionnés à distance du compresseur peuvent mettre jusqu'à 6 minutes pour se stabiliser en température alors que le capteur de l'invention permet une mesure directement aux points d'intérêts sans délai.

**Brève description des dessins**

La figure 1 représente un banc d'essai de turbomachine axiale selon l'invention ;

La figure 2 illustre une aube instrumentée avec des capteurs selon l'invention ;

La figure 3 schématise un capteur selon l'invention ;

La figure 4 montre un premier montage, dit à quatre fils, du pont de Wheatstone utilisé pour le capteur de l'invention ;

La figure 5 montre un second montage, dit à six fils, du pont de Wheatstone utilisé pour le capteur de l'invention ;

Les figures 6A et 6B décrivent des courbes caractéristiques du capteur, à savoir la température et la pression en fonction des tensions mesurées, respectivement ;

La figure 7 illustre une méthode de détermination de la pression et de la température en fonction des tensions mesurées.

**Description des modes de réalisation**

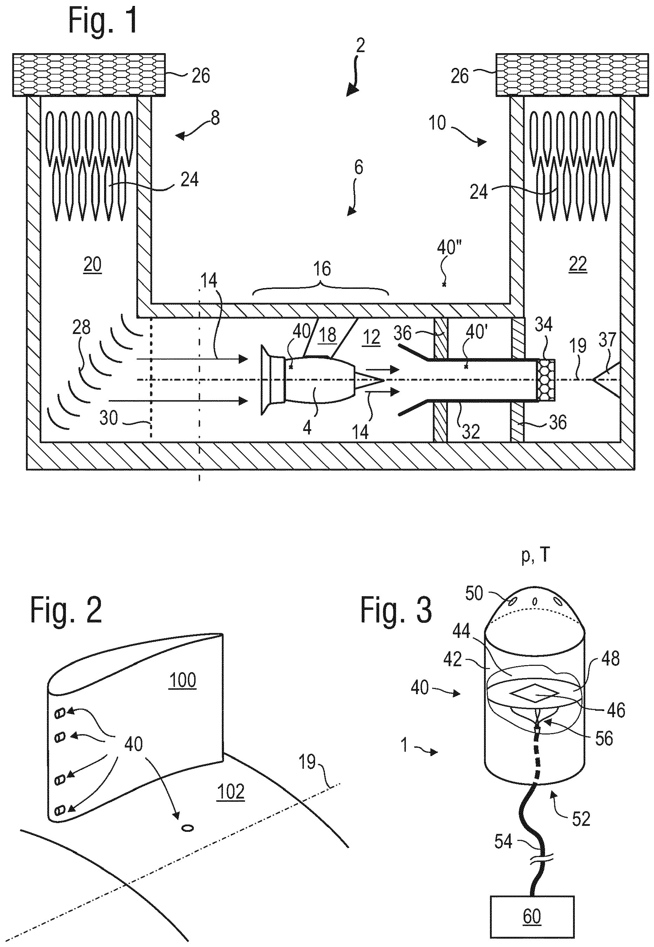

La figure 1 représente de manière simplifiée un banc d'essai 2 de moteur, plus particulièrement un banc d'essai 2 pour turboréacteur 4 d'avion. Le banc d'essai 2 pourrait éventuellement recevoir un avion complet, ou du moins une partie d'avion.

Le banc d'essai 2 forme une construction avec une infrastructure. Il comprend un passage 6 avec une entrée 8 et une sortie 10. Le passage 6 comprend un couloir 12 essentiellement allongé. Sa longueur peut être supérieure ou égale à 60 m. La longueur du couloir 12 permet la circulation en ligne droite d'un flux d'air 14 en limitant la formation de tourbillons nuisant à la qualité de l'essai.

Afin de limiter la résistance à l'écoulement au travers du couloir 12, en particulier la résistance s'opposant à l'entrée d'un flux d'air 14 dans la turbomachine 4, le couloir 12 peut présenter une section de passage supérieure ou égale à 50 m². Le flux d'air 14 traversant le banc d'essai 2 peut être entraîné par la turbomachine 4 elle-même pendant sa phase de test. Une zone d'installation 16 de la turbomachine 4 est prévue. La zone d'installation 16 peut être une zone de fixation de la turbomachine 4. Elle peut être munie d'un système de fixation 18 auquel la turbomachine 4 est fixée pendant son test. Le système 18 peut s'étendre verticalement depuis le plafond du couloir 12, à la manière d'une colonne ou d'un poteau. Le système 18 permet de monter la turbomachine 4 avec un déport, et de centrer cette dernière par rapport au milieu du couloir 12, notamment par rapport à un axe central 19 du couloir 12.

Le couloir 12 peut être délimité par des cheminées verticales 20, 22 en entrée 8 et en sortie 10. Elles permettent une admission d'air et un échappement, tous deux verticaux et en élévation par rapport au couloir 12. Pour réduire les nuisances sonores, elles peuvent comporter des baffles sonores 24, ou lames acoustiques 24, permettant d'absorber des ondes sonores de manière passive.

Des dispositifs 26 complémentaires peuvent être présents en entrée 8 et en sortie 10 pour éviter des inversions d'écoulements, qui perturberaient les conditions de tests. La configuration en « U » n'est qu'un exemple non limitatif de la forme générale du banc d'essai.

A la jonction entre la cheminée amont et le couloir 12, le banc 2 est équipé d'une série de lames de déviation 28. Elles permettent de renvoyer l'air descendant de la cheminée d'entrée 20 dans une direction horizontale. En entrée du couloir 12, le banc 2 présente optionnellement une grille 30 permettant d'intercepter des débris susceptibles de perturber l'essai et d'endommager la turbomachine 4.

En aval de la turbomachine 4, le banc 2 comporte un tube 32 collectant le flux d'air 14 propulsé par la turbomachine 4 et les gaz d'échappement. Le tube collecteur 32 contribue à absorber le bruit généré lors de l'essai. Le tube collecteur 32 comprend un diffuseur 34 à sa sortie. Le diffuseur 34 peut être dans la cheminée de sortie 22.

Le tube collecteur 32 peut être maintenu dans le banc 2 à l'aide de deux cloisons 36. Ces cloisons 36 s'étendent verticalement et transversalement dans le couloir 12. Elles forment des séparations étanches, qui permettent de contenir le flux 14 issu la turbomachine 4.

Pour dévier le flux issu du tube collecteur 32, et du diffuseur 34, un cône 37 peut être mis dans le prolongement du tube collecteur 32. Il peut être fixé à une paroi verticale en fin de couloir 12. Sa pointe peut coïncider avec l'axe central 19.

Le banc 2 comprend également un très grand nombre de capteurs 40, 40', 40". Certains capteurs peuvent être à l'intérieur de la turbomachine, à l'intérieur du banc ou à l'extérieur du banc.

Un capteur 40 selon l'invention peut être disposé à l'intérieur de la turbomachine.

La figure 2 illustre une aube 100 de compresseur, munie de plusieurs capteurs 40 selon l'invention qui mesurent la pression et la température. Les capteurs 40 peuvent être positionnés sur le bord d'attaque de l'aube 100. Ils peuvent être montés en saillie ou peuvent affleurer la surface de l'aube. En prévoyant plusieurs capteurs 40 radialement espacés, il est possible de mesurer une distribution radiale de la température et de la pression à chaque instant.

L'aube 100 peut être une aube rotorique de compresseur ou une aube statorique. Elle peut être à orientation variable (« VSV » pour « variable stator vane »).

L'aube peut être supportée par une virole interne 102. Une position alternative ou complémentaire du capteur 40 est virole sur la virole 102. Alternativement ou en complément, une virole externe peut comprendre un capteur 40.

La figure 3 représente un système de mesure 1 selon l'invention avec un capteur 40 selon l'invention et un module d'analyse 60. Le capteur 40 comprend une buse 42 délimitant une cavité 44 interne qui accueille les éléments de détection du capteur 40, en l'occurrence un circuit électrique 46 supporté par une membrane 48.

La buse 42 comprend des orifices 50 à une de ses extrémités pour mettre la membrane 48 en contact avec la pression et la température qu'il convient de mesurer. À son autre extrémité, la buse 42 comprend un orifice 52 de mise à la pression atmosphérique. La membrane 48 vient donc séparer la pression du milieu à mesurer de la pression atmosphérique. La déformation de la membrane 48 est donc une manifestation physique de la pression au niveau des orifices 50. En mesurant cette déformation par le biais du circuit électrique 46, il est donc possible d'évaluer la pression.

Le passage 52 peut permettre le passage du câble 54 qui relie le capteur 40 au module d'analyse 60.

Le câble 54 est une gaine unique qui comprend plusieurs conducteurs 56 reliés au circuit électrique 46.

Le module d'analyse 60 comprend tous les moyens nécessaires à l'exécution de l'analyse de tensions électriques (voltmètre, processeur, mémoire, interface graphique, interface utilisateur, moyens de communication, etc.).

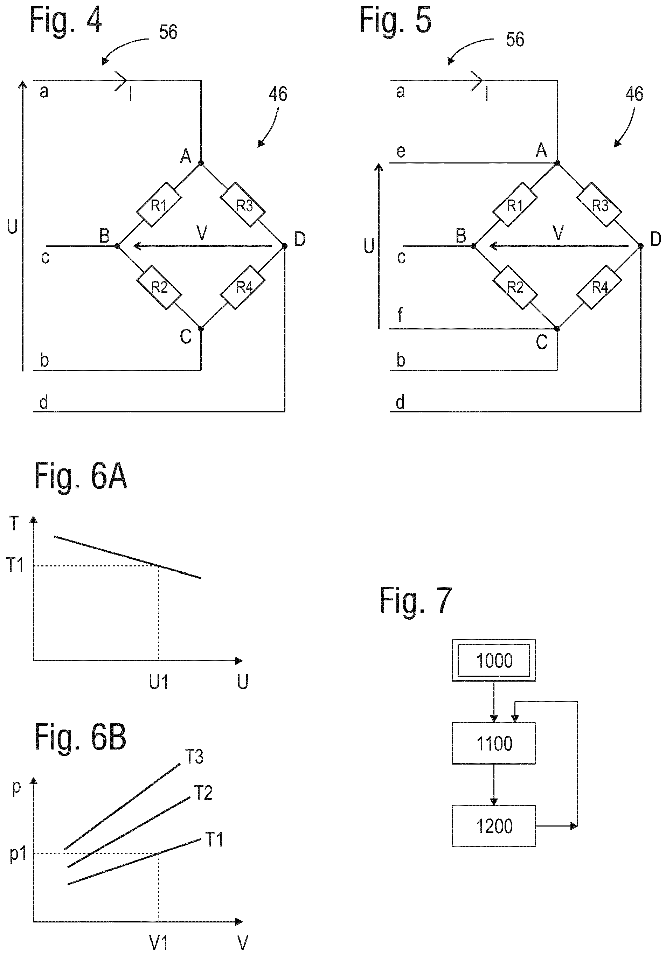

La figure 4 décrit plus en détail le circuit électrique 46 dans une version « à quatre fils ». Celui-ci comprend quatre fils ou conducteurs a, b, c, d et quatre résistances R1, R2, R3, R4 agencées selon un pont de Wheatstone. Au moins une des, et préférentiellement toutes les, résistances est/sont des piézorésistances et/ou des thermistances.

Les conducteurs a et b sont reliés à une source d'alimentation en courant, qui délivre une intensité I.

Les conducteurs a et b sont également reliés au module d'analyse pour mesurer une différence de potentiel U entre les points A et C. Pour une intensité I donnée, la valeur de U varie uniquement avec la température.

Les conducteurs c et d sont reliés au module d'analyse qui mesure la différence de potentiel V entre les points B et D. Pour une intensité I donnée, la valeur de V varie en fonction de la pression et de la température.

La figure 5 décrit un montage selon un deuxième mode de réalisation. Le circuit électrique 146 est pour partie identique au circuit 46 et les signes de références sont donc similaires. Le circuit 146 comprend cependant deux conducteurs supplémentaires, e et f. A la différence du circuit 46 de la figure 4, la mesure de la tension U n'est pas effectuée à l'aide des fils a et b mais via les fils e et f. Comme l'intensité est nulle dans les fils e et f, la mesure de la tension est plus précise car on s'affranchit de la résistance des fils a et b dans la mesure. La version « à six fils » présente donc un avantage sur la précision de mesure bien qu'elle nécessite deux fils de plus.

Les figures 6A et 6B décrivent schématiquement les caractéristiques du pont en fonction de la température et de la pression.

La figure 6A décrit un exemple de la mesure de la température en fonction de la tension U.

Les résistances R1, R2, R3 et R4 forment une résistance équivalente $R_{eq}$ :

$$R_{eq} = \frac{(R1 + R2)(R3 + R4)}{R1 + R2 + R3 + R4}$$

Lorsque la température augmente, la résistance $R_{eq}$ varie. Dans l'exemple illustré, la résistance augment avec la température mais d'autres variations sont possibles. La valeur de $R_{eq}$ est indépendante de la pression car les variations des résistances en fonction de la pression sur la membrane se compensent entre elles. Sur une plage de valeur donnée, une approximation du type linéaire ou polynomial peut être faite.

Comme $U=R_{eq}*I$, les variations de U sont, pour une valeur de I donnée, proportionnelles aux variations de $R_{eq}$. Il y a ainsi une relation linéaire ou polynomiale entre la température T et la valeur de U.

Un point de fonctionnement particulier est matérialisé sur la figure 6A : lorsque la valeur U1 est mesurée pour la tension U, la température vaut T1.

La figure 6B décrit les variations de pression en fonction de la valeur de V. Pour une température (T1, T2, T3) donnée, les variations de pression suivent une courbe qui peut être approximée par une droite. Après avoir défini la température par la courbe de la figure 6A, la pression peut être déterminée par la courbe appropriée de la figure 6B. Par exemple, pour la valeur de T1 déterminée par la figure 6A, la mesure d'une valeur V1 de la tension V donne une pression qui est p1.

La figure 7 illustre une méthode de détermination de la pression et de la température en fonction des tensions mesurées.

Une première étape 1000 d'étalonnage est réalisée avant la première utilisation du système de mesure.

Par étalonnage du capteur, les différentes courbes ou leur formulations approchées peuvent être obtenues. La calibration peut être faite pour une valeur figée de température, en faisant varier la pression, ou pour une valeur figée de pression, en faisant varier la température. Une telle manipulation peut nécessiter de placer le capteur dans un volume de gaz extensible car à volume constant, les variations de pression et de température sont liées.

Après l'étalonnage 1000, une étape 1100 de mesure de U permet de déterminer la température, et une étape 1200 de mesure de V permet de déterminer la pression.

Il est entendu que les mesures de U et V sont préférentiellement faites simultanément, les analyses de T et p étant, elles, séquentielles.

Les étapes sont répétées à une fréquence de 8 kHz au minimum. Les données sont enregistrées pour être traitées ultérieurement.

**Revendications**

1. Système de mesure (1) pour une turbomachine (4), le système comprenant un capteur piézorésistif (40) et un module d'analyse (60), **caractérisé en ce que** le capteur (40) comprend des résistances (R1, R2, R3, R4) agencées selon un pont de Wheatstone et est apte à délivrer deux signaux de tension (U, V), le capteur (40) et le module (60) étant reliés par au moins deux paires de conducteurs (a, b, c, d, e, f) permettant au module de mesurer simultanément les deux tensions électriques (U, V) et déterminer une valeur de pression (p) et une valeur de température (T) au voisinage du capteur (40) à partir de ces deux tensions électriques (U, V).

2. Système selon la revendication 1, **caractérisé en ce que** le pont de Wheatstone comprend deux branches parallèles (A-B-C, A-D-C), chacune des branches (A-B-C, A-D-C) disposant de deux résistances (R1, R2 ; R3, R4) en série et d'un point intermédiaire (B, D) entre les deux résistances (R1, R2 ; R3, R4), la température (T) étant estimée à partir d'une mesure de tension (U) aux bornes de deux résistances (R1, R2 ; R3, R4) d'une même branche (A-B-C, A-D-C) et la pression (p) étant estimée, à partir d'une mesure de tension (V) entre les deux points intermédiaires (B, D) des deux branches (A-B-C, A-D-C).

3. Système selon la revendication 2, **caractérisé en ce qu'**il est alimenté en courant (I).

4. Système selon l'une des revendications 1 à 3, **caractérisé en ce que** les résistances (R1, R2, R3, R4) sont agencées sur une membrane déformable (48).

5. Système selon l'une des revendications 1 à 4, **caractérisé en ce qu'**il comprend une buse (42) avec une cavité (44), la buse (42) étant percée pour permettre la mise au contact fluidique d'un flux d'air à mesurer avec la cavité (44).

6. Système selon la revendication 5, **caractérisé en ce que** la buse (42) a un diamètre inférieur à 3.5 mm, préférablement inférieur à 3 mm.

7. Système selon l'une des revendications 1 à 6, **caractérisé en ce qu'**il comprend 4 conducteurs (a, b, c, d) aptes à relier le capteur (40) au module d'analyse (60).

8. Système selon l'une des revendications 1 à 7, **caractérisé en ce qu'**il comprend 6 conducteurs (a, b, c, d, e, f) aptes à relier le capteur (40) au module d'analyse (60).

9. Système selon l'une des revendications 7 ou 8, **caractérisé en ce que** tous les fils (a, b, c, d, e, f) sont groupés dans une gaine commune (54) apte à être connectée au module d'analyse (60).

10. Système selon l'une des revendications 1 ou 9, **caractérisé en ce qu'**au moins une des résistances (R1, R2, R3, R4) est un thermistor.

11. Procédé de détermination des conditions au voisinage d'un capteur (40) piézorésistif, préférentiellement un capteur pour le système selon l'une des revendications 1 à 10, **caractérisé en ce qu'**il comprend une étape de mesure simultanée de deux tensions (U, V) et la détermination, sur la base de ces deux mesures, de la pression (p) et de la température (T) au voisinage du capteur (40).

12. Procédé de mesure selon la revendication 11, **caractérisé en ce que** le capteur (40) est positionné au contact du flux d'air dans une turbomachine (4).

13. Procédé selon l'une des revendications 11 ou 12, **caractérisé en ce que** l'étape de mesure consiste en une mesure à une fréquence comprise entre 8 kHz et 100 kHz.

14. Banc d'essai (2) de turbomachine (4) comprenant un système de mesure (1) **caractérisé en ce que** le système de mesure (1) est selon l'une des revendications 1 à 10, le capteur (40) étant disposé au voisinage du flux d'air dans le compresseur de la turbomachine (4), préférentiellement au voisinage du bord d'attaque d'une aube statorique (100) ou rotorique (100).

15. Utilisation d'un système selon l'une des revendications 1 à 10 dans un turboréacteur (4) d'aéronef en vol.

# Fig. 1

# Fig. 2

# Fig. 3

p, T

# Fig. 4

# Fig. 5

# Fig. 6A

# Fig. 6B

# Fig. 7

Europäisches
Patentamt

European
Patent Office

Office européen
des brevets

**RAPPORT DE RECHERCHE EUROPEENNE**

Numéro de la demande

EP 19 19 4730

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GB 1 431 039 A (EMI LTD) 7 avril 1976 (1976-04-07) | 1-8, 10-15 | INV. G01D21/02 G01K7/16 G01L9/00 |
| Y | * figure 1 * ----- | 9 | |
| Y | US 5 568 815 A (RAYNES JOHN W [US] ET AL) 29 octobre 1996 (1996-10-29) * figure 3 * ----- | 9 | |

DOMAINES TECHNIQUES
RECHERCHES (IPC)

G01L
G01D
G01W
G01M
G01K

Le présent rapport a été établi pour toutes les revendications

| Lieu de la recherche | Date d'achèvement de la recherche | Examinateur |
|---|---|---|
| La Haye | 3 février 2020 | Kaiser, Jean-Luc |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

...............................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 19 4730

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-02-2020

| Document brevet cité au rapport de recherche | Date de publication | Membre(s) de la famille de brevet(s) | Date de publication |
|---|---|---|---|
| GB  1431039        A | 07-04-1976 | DE        2326926  A1<br>GB        1431039  A | 13-12-1973<br>07-04-1976 |
| US  5568815        A | 29-10-1996 | CA        2159854  A1<br>EP        0712603  A2<br>EP        2299574  A2<br>JP        3782494  B2<br>JP     H08299286  A<br>US        5568815  A | 22-05-1996<br>22-05-1996<br>23-03-2011<br>07-06-2006<br>19-11-1996<br>29-10-1996 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7159401 B1
- US 20150114128 A1
- US 20120014936 A1